# EUROPEAN PATENT APPLICATION

(11) **EP 2 388 296 A1**
(43) Date of publication of application: **23.11.2011**
(21) Application number: 10382127.8
(22) Date of filing: 18.05.2010
(51) Int. Cl.: C08L 95/00, E01C 7/24

(54) **Composite material for road, process for obtaining it, bituminous mixture contained therein and its use**

(71) Applicant: Sorigué, S.A., 25006 Lleida (ES)
(72) Inventor: Querol Solà, Núria, 25230 Mollerussa - Lleida (ES)
(74) Representative: Ponti Sales, Adelaida

(57) **Abstract**

The material comprises aggregate, mineral powder and a hydrocarbon binder and is characterised in that the hydrocarbon binder is a bituminous emulsion modified with rubber powder, where said emulsion comprises bitumen modified with rubber powder from tyres and water in a ratio of between 60/40 to 90/10 and where said composite material comprises:
- aggregates of 90% to 95% by weight of the total weight of the composite material;
- bituminous emulsion modified with rubber powder of 5% to 10% by weight of the total weight of the composite material; and
- mineral powder of 1.0% to 1.5% by weight of the weight of the bitumen modified with rubber powder contained in the bituminous emulsion,

to give a half warm mixture suitable for road.

Said composite material is obtained by mixing the aggregate, mineral powder and emulsion to give a half warm mixture or composite material useful for paving of surfaces at a temperature of less than 100 °C.

Said emulsion is obtained by stirring for dispersion where the bitumen phase is worked in a laminar way, with low stirring and is used in a bituminous mixture at temperatures below 95 °C with a bitumen content of up to 90%.

## Description

### FIELD OF THE INVENTION

The present invention refers to a composite material for road, a process for obtaining it, the bituminous mixture contained therein and its use in paving roads and similar.

### BACKGROUND OF THE INVENTION

Various types of materials for road are known, especially those for paving roads, tracks, streets, etc., that mainly comprise aggregates, including mineral powder and a hydrocarbon binder. Optionally, they may also comprise additives.

The process of manufacturing these composite materials for road comprises the basic stages of heating the hydrocarbon binder with the aggregates and mineral powder.

Aggregates have been extensively used for the production of concrete and mortar, fillers, edging, railway ballast, road base and sub-base and asphaltic agglomerate surfaces and can be of natural, artificial or recycled origins. Natural aggregates are classified by their origin from sedimentary calcareous rocks such as limestone and dolomite, sand and gravel, and igneous and metamorphic rocks such as granite, basalt and quartzite. Artificial aggregates come from industrial processes and have been subjected to some physical-chemical or other modifications. Finally, recycled aggregates are residues from demolition or construction and rubble.

Among the materials used in urban, industrial or road paving are those produced from asphaltic or bituminous mixtures.

A bituminous mixture is a mixture of highly viscous organic liquids, black, sticky, fully soluble in carbon disulphide and mainly composed of polycyclic aromatic hydrocarbons acting as a binder. In general, a bituminous mixture is a combination of bitumen, a viscous material, sticky and black in colour, and aggregates including mineral powder in specific proportions. The relative proportions of these aggregates determine the physical properties of the mixture and, eventually, its performance as a final mixture for a specific use. These bituminous mixtures can be manufactured in plants with suitable equipment. Depending on the properties and thicknesses of the layer, they may bring structural capacities to the road.

It is well known that the majority of bitumens contain sulphur and various heavy metals such as nickel, vanadium, lead, chromium, mercury and also arsenic, selenium and other toxic elements. Bitumen is a highly impermeable material, adherent and cohesive, capable of withstanding high instantaneous forces and of flowing under the action of continuous loads. It has the ideal properties for the construction of road, basically fulfilling the functions of making the structure of the road impermeable, making it insensitive to humidity and effective against rain water. It also provides an intimate union and cohesion between aggregates and is capable of withstanding the mechanical action of disaggregation caused by vehicle loads.

In order to improve the mechanical and rheological properties of bitumen, the addition of polymers has been described, thereby increasing the viscosity at high temperatures and reducing thermal sensitivity, the risk of permanent deformation, rutting and therefore increasing the elastic component of bitumen and reducing the risk of cracking caused by the fatigue or low temperatures. The addition of rubber powder in such bitumens as a substitute for polymers has also been described.

Once these mixtures have been prepared, they must be transported to the place where they are distributed with mechanical spreaders and later consolidated and compacted with suitable rollers. The temperature at which the bituminous mixture reaches its destination must be controlled for its correct distribution. If the temperature is too high, for example over 180 °C, the binder can have reached an excessive temperature with danger of oxidation or premature ageing. If the temperature is too low, of the order of 135 °C, the compaction can be very difficult. Therefore, the temperature of the mixture conditions the bitumen, which provides the energy of compaction to the whole material.

Due to the elevated temperatures of currently used road techniques, there is a significant concern, especially environmental, for CO₂ and volatile organic compound (VOC) emissions to the atmosphere caused at such temperatures, such as is demonstrated by the Kyoto protocol.

Current road techniques using the known hot mixtures present the following environmental problems:
- heating of the atmosphere by burning fossil fuels;
- generation of polluting combustion gases, mainly NO₂, SO₂ and CO₂;
- emission of volatile organic compounds due to bitumen heating.
Therefore, from the environmental point of view, the technology of hot mixing goes against current trends that propose the elimination or at least the limitation of gas emissions to the atmosphere.

Thus, there is still no existing paving technique starting from a bituminous mixture that can work at temperatures lower than 100 °C and which at the same time has improved mechanical and waterproofing properties compared to the known hot mixtures and which is also environmentally friendly.

### DESCRIPTION OF THE INVENTION

The objective of the present invention is to resolve the drawbacks mentioned above, by developing a composite material for road that comprises aggregates that include mineral powder and a hydrocarbon binder, that is characterised by the fact that said hydrocarbon binder is a bituminous emulsion, where said bituminous emulsion comprises bitumen modified with rubber powder from tyres and water in a ratio of between 60/40 to 90/10 and where said composite material comprises:
- aggregates of 90% to 95% by weight of the total weight of the composite material;
- bituminous emulsion modified with rubber powder of 5% to 10% by weight of the total weight of the composite material;
- mineral powder of 1.0% to 1.5% by weight of the weight of the modified bitumen contained in the bituminous emulsion.

Advantageously, the bituminous emulsion acts as a binder in the composite material for road of the invention and has been obtained by a technique allowing working the bitumen phase at a temperature below 110°C and the aqueous phase at 30-60 °C in contrast to the common temperatures of 120 °C to 150 °C for the bitumen phase and between 30 °C and 60 °C for the aqueous phase used for the preparation of classical bituminous emulsion.

Basic aspects in the manufacture of a bituminous emulsion are the temperatures of the two phases comprising the emulsion. The binding phase (bitumen and fluidisers) must be heated until reaching a minimum viscosity that allows its pumping and shearing in the mill. The aqueous phase must be heated to a temperature at which is does not cause excessive thermal shock in contact with the bitumen phase on entering the mill. Also, the sum of the temperatures of the phases must not exceed 100 °C to avoid boiling of the water. The presence of water vapour in the mill causes cavitations and results in partial breakage of the emulsion.

The authors of the present invention have found that obtaining a bituminous emulsion modified with rubber powder from tyres in a system of stirring by dispersion in a suitable reactor allows working the bitumen phase in a laminar way, with low stirring, with bitumens of high viscosity, above 4000 cP.s, to obtain emulsions at temperatures below 95°C with average particle sizes of approximately 2µm, of very low polydispersivity (1.396), high viscosity and high storage stability.

To obtain the bituminous emulsion used in the present invention, which comprises a bituminous phase and an aqueous phase, the following stages are carried out:
i) preparation of the bitumen phase by heating a quantity of bitumen to a temperature of between 170°C and 185 °C, preferably between 175°C and 180 °C.
ii) addition of a quantity of rubber powder from tyres to the pre-heated bitumen phase;
iii) stirring of the mixture of both components and, optionally, adding an agent for stabilising the tyre rubber powder, followed by stirring and cooling to a temperature of between 100°C and 110 °C, preferably between 105°C and 110 °C.
iv) preparation of a soapy phase by mixing a quantity of cationic asphaltic emulsifier at a temperature of between 25°C and 45 °C, preferably between 30°C and 40 °C, a quantity of water at a temperature of between 25 °C and 65°C, preferably between 30 °C and 60°C and a quantity of emulsifier activation agent; and
v) mixing the bitumen phase prepared earlier with the soapy phase prepared earlier and adding water until the ratio of the bitumen phase/water phase is between 60/40 and 90/10, followed by stirring to obtain the bituminous emulsion modified with rubber powder.

Advantageously, the bituminous emulsion modified with rubber powder obtained has a final bitumen content of between 60% and 90% by weightof the total weight of the emulsion.

In accordance with a preferred embodiment of the invention, the quantity of rubber powder from tyres is between 2% and 10%, preferably between 2% and 5%, more preferably between 2% and 4% by weight of the total weight of the bitumen phase.

In a preferred embodiment, in stage iii), a rubber powder stabilising agent is added such as, for example, polyphosphoric acid, in a quantity of between 0.1% and 0.5%, preferably between 0.1% and 0.35%, more preferably between 0.15% and 0.25% by weight of the total weight of the bitumen phase.

In the present invention, the term "tyre rubber powder stabilising agent" is understood to mean any compound capable of retaining rubber in the bitumen matrix for a specific time through van der Waals type chemical bonds, hydrogen bonds.

In a preferred embodiment, a quantity of cationic asphaltic emulsifier is added in stage iv) of between 5% and 15%, preferably between 7% and 10% by weight, a quantity of water of between 75% and 95%, preferably between 80% and 90% by weight, and a quantity of emulsifier activating agent, preferably an inorganic acid such as, for example, hydrochloric acid, of between 2% and 9%, preferably between 4% and 7% by weight of the total weight of the soapy phase.

In the present invention, the term "cationic asphaltic emulsifier" or "cationic surfactant" are understood to mean any organic compound of relatively high molecular weight where the linear or cyclic hydrocarbon part is soluble in asphalt. A cationic surfactant is characterised by having a net positive electric charge in its hydrophilic part. Substances that at high pH do not have net charge but a lower pH are cationic are also included in this group, such as the case of the alkyl amines.

The process described above for the preparation of the bituminous emulsion modified with tyre rubber powder is also called the "stirring for dispersion" process in the present invention and allows obtaining an emulsion modified with rubber powder with final bitumen content as high as 90% by weight of the total weight of the emulsion.

Advantageously, the particle size of the bituminous emulsion modified with rubber powder obtained by the stirring for dispersion process described does not depend on the radius between the rotor and the stator as in emulsions manufactured with mills. See below in Figure 1 about the stirring for dispersion process for obtaining the bituminous emulsion modified with rubber powder of the invention, as well as Figures 2 and 3 regarding the particle sizes of a conventional emulsion compared with the bituminous emulsion modified with rubber powder obtained as described above.

Surprisingly, the authors of the present invention found that the use of a bituminous emulsion modified with rubber powder obtained as described above with a hydrocarbon binder in a composite material for road allows the preparation of a mixture called "half warm mixture" in this invention that has many advantages compared to the hot mixtures of the state of the art.

Thus the composite material for road that comprises aggregates, mineral powder and a bituminous emulsion modified with rubber powder, also called "half warm mixture for road" in the present invention comprises the mixture of the aggregates, mineral powder and the bituminous emulsion at a mixing temperature of between 90-110 °C compared to the conventional temperatures of 170-180 °C.

Advantageously, the manufacture of the composite material or half warm mixture for road of the present invention requires less fuel consumption for heating the aggregates and, therefore, the consumption of fuel and CO₂ and SO₂ emissions to the atmosphere derived from this heating are substantially reduced.

In addition, manufacture of the composite material or half warm mixture for road of the invention also allows substantial reduction of emissions of volatile organic compounds (VOCs) from bitumen, exponentially with the reduction in temperature of the bitumen.

Thus, with the composite material or half warm mixture of the invention, the temperature of adding the aggregates is reduced to a temperature of between 105-110 °C, which mixed with the bituminous emulsion modified with rubber powder at a temperature of between 75-95 °C, allows obtaining a composite material or half warm mixture ready for paving at a temperature of below 100 °C.

Advantageously, with the composite material or half warm mixture for road of the invention, the problems of oxidation or premature weathering of the bitumen are reduced due to the fact that said half warm mixture can be spread at temperatures as low as 90-100 °C compared to the common 150-180 °C of hot mixtures, without this being accompanied by an increase in compaction of the mixture.

In Table 1 below there is a comparison of the commonly used temperatures in the state of the art for manufacturing a bituminous mixture for road compared to the temperatures used for the manufacture of the half warm bituminous mixture of the present invention.

**Table 1**

| MATERIALS | CONVENTIONAL TEMPERATURES (°C) | MATERIALS | INVENTION TEMPERATURES (°C) |
|---|---|---|---|
| AGGREGATES | 155-175 °C | AGGREGATES | 105-110 °C |
| BINDER | 150-170°C | EMULSION | <95°C |
| PAVING STAGE | 130 °C | PAVING STAGE | <100 °C |
| | | | |

Also advantageously with the composite material or half warm mixture for road of the invention, the reuse of old tyres is achieved, thus contributing to their removal or reuse as raw material in the preparation of the bituminous emulsion contained in the half warm mixture.

Therefore, with the composite material or half warm mixture for road of the invention, a material that is good for the environment is provided, both from the point of view of the starting materials used and from the reduction of fuel used, reducing emissions of toxic compounds to the atmosphere, reducing the oxidation of the binder and therefore a contribution to extending useful life, in addition to providing road with excellent mechanical and stability properties.

### DESCRIPTION OF THE FIGURES

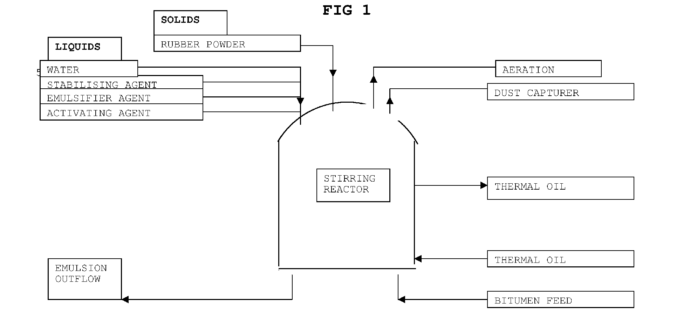

Figure 1 is a schematic representation of a plant with a reactor and various feed lines for the starting materials for obtaining a bituminous emulsion modified with rubber powder by the stirring for dispersion process. See also Example 1 of the embodiment.

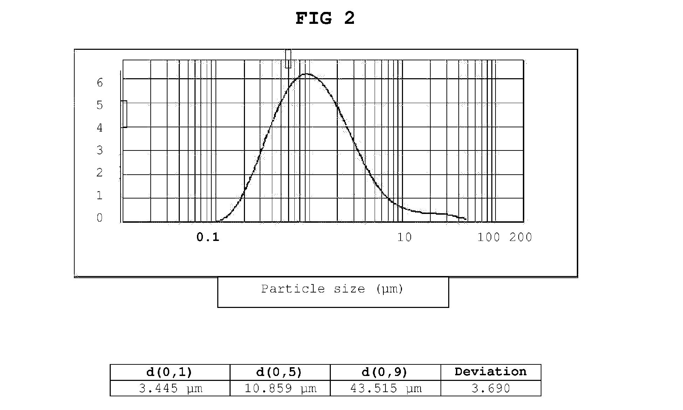

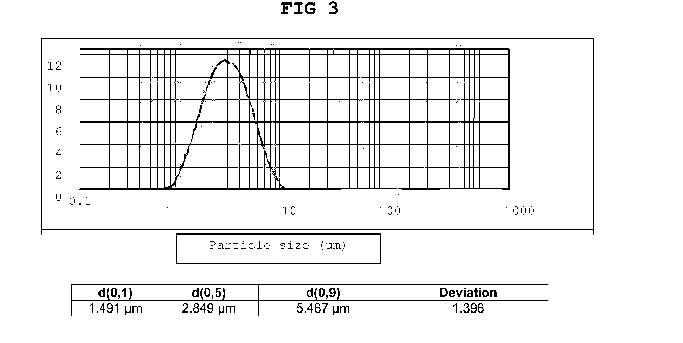

Figures 2 and 3 show the particle size (µm) distribution of a conventional emulsion (Fig 2) compared to a bituminous emulsion modified with rubber powder of the invention (Fig 3), which confers high storage stability to the emulsion of the invention.

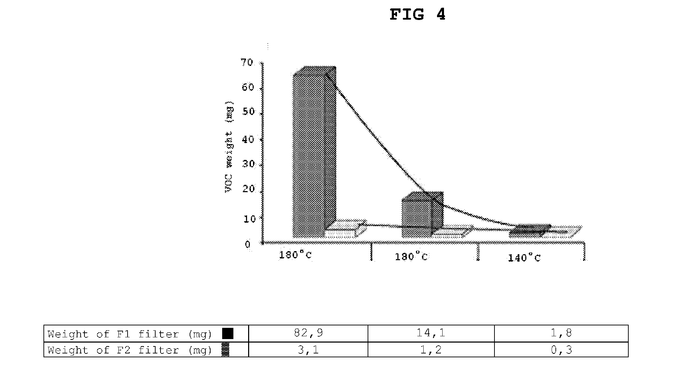

Figure 4 shows a bar diagram where the volatile organic compounds, VOCs, (weight collected in F1 and F2 filters in mg) are represented at various bitumen temperatures. Figure 4 also shows how the VOC emissions have an exponential relationship to the bitumen temperature.

Below, Table 2 shows the fuel consumption of a plant for manufacturing standard bituminous mixture as a function of the temperature of the aggregates:

**Table 2**

| **Temperature of aggregates (°C)** | **Fuel consumption (kg fuel/tonne aggregate)** |
|---|---|
| 140 | 6.6 |
| 160 | 7.3 |
| 180 | 7.9 |

The combustion of fuel is governed by the following reaction:

Cn-H2n+2 + x O₂ -> nCO₂ + (2n+1)H₂O

In terms of weight, a fuel with an average chain length of 25 carbon atoms generates after burning some 3.5 times its weight of CO₂.

Thus, the great saving in fuel comes from working at temperatures below 100 °C, which does not allow the heat capacity of the fuel to vaporise water in the plant.

This saving can be estimated at some 2 litres of fuel per tonne of aggregate, which when linked to the savings of working at lower temperature makes the total reduction of fuel to be 4 litres per tonne of aggregate.

### DESCRIPTION OF PREFERRED EMBODIMENTS

For better understanding of the description above, some examples are given below that, schematically and only as non-limiting examples, represent a practical case of embodiment.

### Example 1. Preparation of a bituminous emulsion modified with rubber powder obtained from tyres.

Prepare the bitumen phase with rubber powder from old tyres. To do this, introduce 4,840 kg bitumen type 80/100 into one of the reactors and heat to 175-180 °C. Once this temperature is reached, add 3% of rubber powder that is 150 kg, through the dosing chute. Stir at between 800-950 rpm for one and a half hours. After this time, add 0.2% PPA (polyphosphoric acid) and leave stirring for 30 more minutes. After this time, unload into a tank for cooling to 105-110°C.

Repeat the operation until there is sufficient bitumen with rubber powder to emulsify.

To perform emulsification, it is necessary to first prepare the soapy phase in one of the tanks. This contains:
- 330 kg of cationic asphaltic emulsifier (ASFIER 100)
- 200 kg of HCl
- 2,970 kg of H₂O

The water is added at a temperature of 30-60 °C, while the surfactant is at 30-40 °C. Leave stirring until fully dissolved.

In a second reactor, load 3,000 kg of bitumen with rubber that was prepared earlier. Allow to cool to 100-105 °C. Once this temperature has been reached, add 333 kg of the previously prepared soapy solution and stir at 950 rpm for 5 minutes. Check that it has emulsified and add 1,745 kg H₂O. Leave stirring at 400-500 rpm for 10-15 minutes and unload the emulsion into the corresponding tank.

### Example 2. Manufacture of a half warm mixture containing the bituminous emulsion modified with rubber powder obtained in Example 1.

For the manufacture of the half warm mixture, a hot mixing plant model Intrame 160 was used.

Between 5-10% of the bituminous emulsion modified with rubber powder as prepared in Example 1 was heated to 80°C and fed into 95% of aggregate previously heated to between 100-110 °C.

The feeding of the aggregate was performed through a by-pass, so that it was not necessary to perform hot fractionation. Then, the mineral powder was added to the mixture.

Then, the mixing of aggregate, emulsion and mineral powder was allowed to proceed for 20 seconds, after which the degree of coverage of the aggregate was 95%. The half warm mixture obtained was immediately loaded into trucks for transport to the place of application. **Example 3. Spreading of the** half warm **mixture from Example 2 for road surfaces.**

The half warm mixture obtained in Example 2 was transported to the place of application in suitable trucks over a time of approximately 1 hour.

Then, the spreading of the half warm mixture was performed using mechanical spreaders. During the spreading, the half warm mixture was at approximately 90-100 °C. The degree of workability of the mixture was excellent at this temperature, as if it were a hot mixture.

The spread half warm mixture was consolidated with suitable rollers and, finally, a pneumatic roller was used to seal the surface layer.

After the compaction was completed and the density appropriate, traffic was allowed into the worked zone when the layer had reached ambient temperature.

Despite the description above and the specific embodiments of the present invention illustrated, it is evident that an expert in the field could introduce variants and modifications or substitute details for other technically equivalent details, without departing from the scope of protection defined by the claims attached. Thus, for example, the use of any type of aggregate, either of natural, artificial or recycled origin, remains within the scope of the present invention.

## Claims

1. Composite material for road comprising aggregate, mineral powder and a hydrocarbon binder, **characterised by** the fact that this hydrocarbon binder is a bituminous emulsion and by the fact that this composite material comprises:
- aggregates of 90% to 95% by weight of the total weight of the composite material;
- bituminous emulsion modified with rubber powder of 5% to 10% by weight of the total weight of the composite material;
- mineral powder of 1.0% to 1.5% by weight of the weight of the modified bitumen contained in the bituminous emulsion,
to give a half warm mixture suitable for road.

2. Composite material according to claim 1, where said bituminous emulsion comprises bitumen modified with rubber powder from tyres, and water in a ratio of between 60/40 and 90/10 respectively.

3. Composite material according to any of the claims 1 and 2, where said bituminous emulsion that comprises a bituminous phase and an aqueous phase are obtained by the following stages:
i) preparation of the bitumen phase by heating a quantity of bitumen to a temperature of between 170 °C and 185 °C;
ii) addition of a quantity of rubber powder from tyres to the pre-heated bitumen phase;
iii) stirring of the mixture of both components and, optionally, adding an agent for stabilising the tyre rubber powder, followed by stirring and cooling to a temperature of between 100 °C and 110 °C;
iv) preparation of a soapy phase from the mixture of a quantity of cationic asphaltic emulsifier at a temperature of between 25 °C and 45 °C, a quantity of water at a temperature of between 25 °C and 65 °C and a quantity of emulsifier activating agent; and
v) mixing the bitumen phase prepared earlier with the soapy phase prepared earlier and adding water until the ratio of the bitumen phase/water phase is between 60/40 and 90/10, followed by stirring to obtain the bituminous emulsion modified with rubber powder.

4. Composite material according to claim 3, where said bituminous emulsion has a bitumen content of between 60-90% by weight of the total weight of the emulsion.

5. Composite material according to any of the previous claims, where said bituminous emulsion has a quantity of rubber powder of between 2% and 10% by weight of the total weight of the bitumen phase.

6. Composite material according to any of the previous claims, where said bituminous emulsion has a quantity of rubber powder stabilising agent of between 0.1% and 0.5% by weight of the total weight of the bitumen phase.

7. Composite material according to any of the previous claims, where said bituminous emulsion has a quantity of cationic asphaltic emulsifier of between 5% and 15% by weight, a quantity of water of between 75% and 95% by weight and a quantity of emulsifier activating agent of between 2% and 9% by weight of the total soapy phase.

8. Composite material according to any of the previous claims, where said bituminous emulsion has an average particle size of less than 2µm and a polydispersivity less than 1.5.

9. Process for obtaining a composite material for road according to any of the previous claims that comprises:
i) preparing a bituminous emulsion modified with rubber powder and heating it to a temperature below 95 °C;
ii) pre-heating the aggregates to a temperature below 110 °C; and
iii) mixing the pre-heated aggregates with the bituminous emulsion prepared previously, followed by adding mineral powder,
to obtain a half warm bituminous mixture ready for spreading on the surface at a temperature of less than 100 °C.

10. Process for obtaining a composite material according to claim 9, where the bituminous emulsion modified with rubber powder is heated at a temperature below 90 °C.

11. Use of a bituminous emulsion modified with rubber powder from tyres as a hydrocarbon binder of a composite material for road.
